# EUROPÄISCHE PATENTSCHRIFT

(11) **EP 2 152 461 B1**
(45) Veröffentlichungstag und Bekanntmachung des Hinweises auf die Patenterteilung: **30.07.2014**
(21) Anmeldenummer: 07818166.6
(22) Anmeldetag: 14.09.2007
(51) Int. Cl.: B23K 20/12, B23K 35/02, B23P 19/06, F16B 37/06

(54) **REIBSCHWEISSVERBINDUNG MIT MEHREREN AUFEINANDERLIEGENDEN FLÄCHIGEN BAUTEILEN UND MIT EINEM VERBINDUNGSKÖRPER MIT VERFORMUNG EINES VERBINDUNGSKÖRPER-BUNDES NACH DEM REIBSCHWEISSEN ; VERFAHREN ZUR HERSTELLUNG EINER SOLCHEN REIBSCHWEISSVERBINDUNG**
FRICTION WELDING CONNECTION WITH MULTIPLE PLANAR COMPONENTS LOCATED ONE ATOP THE OTHER AND A CONNECTION BODY WITH THE DEFORMATION OF A COLLAR OF THE BODY AFTER THE FRICTION WELDING ; METHOD OF PRODUCING A FRICTION WELDING CONNECTION
ASSEMBLAGE SOUDE PAR FRICTION AVEC PLUSIEURS ELEMENTS CONSTITUTIFS PLATS SUPERPOSES ET AVEC UN CORPS D'ASSEMBLAGE AVEC DEFORMATION D'UNE EMBASE DE CE CORPS APRES SOUDAGE PAR FRICTION ; PROCEDE D'ASSEMBLAGE PAR SOUDAGE PAR FRICTION D'UN TEL ASSEMBLAGE

(30) Priorität: 10.05.2007 DE 102007021891
(43) Veröffentlichungstag der Anmeldung: 17.02.2010
(73) Patentinhaber: EJOT GmbH & Co. KG, 57334 Bad Laasphe (DE)
(72) Erfinder: CHRIST, Eberhard, 99897 Tambach-Dietharz (DE); THIEM, Jörg, 98544 Zella-Mehlis (DE); FUCHS, Torsten, 07743 Jena (DE); DUBIEL, Gerhard, 99897 Tambach-Dietharz (DE)
(74) Vertreter: Puschmann Borchert Bardehle Patentanwälte Partnerschaft mbB
(86) Internationale Anmeldenummer: PCT/EP2007/008023
(87) Internationale Veröffentlichungsnummer: WO 2008/138388

(56) Entgegenhaltungen:
- WO-A-2007/147464
- DE-A1- 19 620 814
- JP-A- 7 042 721
- US-A- 3 477 115
- US-A- 3 495 321
- US-A- 4 359 813
- US-A- 6 067 839

## Beschreibung

Die Erfindung bezieht sich auf eine Reibschweißverbindung gemäß dem Oberbegriff des Anspruchs 1 (siehe, z.B., US 3,495,321).

Darüber hinaus bezieht sich die Erfindung auf ein Verfahren zur Herstellung einer derartigen

Reibschweißverbindung.

Eine Reibschweißverbindung von mehreren aufeinanderliegenden flächigen Bauteilen, die von einem Verbindungskörper zusammengehalten sind, der mit einem Bund auf einem oberen Bauteil aufsitzt, wobei dieses obere Bauteil einen Durchbruch für die Aufnahme des Verbindungskörpers aufweist, ist aus der US-PS 3,477,115 bekannt. Das zur Herstellung dieser Reibschweißverbindung angewendete Verfahren läuft gemäß den Angaben in der genannten Druckschrift darauf hinaus, durch ein ungelochtes oder gelochtes oberes Bauteil mit einem Verbindungskörper mit stumpfer Stirnfläche ein unteres Bauteil zu erreichen und unter Andrücken des Verbindungskörpers auf das untere Bauteil eine Reibschweißzone zwischen dem Verbindungskörper und dem unteren Bauteil herbeizuführen, wobei dann der Verbindungskörper mit seinem auf dem oberen Bauteil aufliegenden Bund und der Reibschweißzone die beiden Bauteile zusammenhält. Dieser Zusammenhalt hängt stark von dem Zustandekommen der Reibschweißzone ab, die insbesondere zwischen der Stirnseite des Verbindungskörpers und dem unteren Bauteil ausgebildet ist, ohne dass dabei auf die beiden Bauteile eine besondere Haltespannung wirkt, da beim Reibschweißen die Andruckkraft sich wegen der Aufweichung des zu verschweißenden Materials verringert und die zusammenzuhaltenden Bauteile gerade in der Lage festgehalten werden, in der dann das Material in der Reibschweißzone erstarrt. Eine unter einer besonderen Haltespannung stehende Verbindung kann also durch das gemäß der genannten Druckschrift angewendete Reibschweißverfahren nicht herbeigeführt werden.

Es ist weiterhin aus der US 3,495,321 eine Reibschweißverbindung von zwei aufeinanderliegenden flächigen Bauteilen bekannt, bei der ein Verbindungskörper durch ein oberes mit einem Loch versehenes Bauteil hindurch geführt und mit seiner Reibschweißverbindung mit dem unteren Bauteil verbunden wird. Dabei wird durch ein Andrückwerkzeug aus dem Verbindungskörper ein Ringwulst herausgedrückt, der schließlich an der freien Seite des oberen Bauteils anliegt. Auch bei dieser Gestaltung gibt es das Problem, dass nach Abkühlen der beiden Bauteile des Verbindungskörpers diesem keine besondere Haltspannung gegenüber dem unteren Bauteil gegeben ist.

Schließlich wird noch auf die US-PS 4,359,813 verwiesen, in der eine Reibschweißverbindung von zwei aufeinanderliegenden Bauteilen beschrieben wird, gemäß der ein Verbindungskörper durch ein oberes Loch des Bauteils hindurchgeführt und gegen das untere Bauteil gedrückt wird, wobei die Verschweißung durch einen elektrischen Stromstoß erfolgt. Es handelt sich hier also nicht um ein Reibschweißverfahren. Das den Verbindungskörper haltende Druckelement sowie das Verbindungselement selbst sind so gestaltet, dass am Ende des Druckvorganges der als eine Art Hohlniet ausgebildete Verbindungskörper mit seinem aus dem oberen Bauteil herausstehenden Rand nach außen umgestülpt wird und damit eine Art Schulter bildet, die nur mit ihrer durch die Umstülpung gebildeten Lage an dem oberen Bauteil aufliegt und daher insbesondere nach dem Abkühlen der betreffenden Teile nicht in der Lage ist, eine definierte bleibende Druckkraft im Sinne einer Vorspannung auf das obere Bauteil für den Zusammenhalt der beiden Bauteile auszuüben.

Der Erfindung liegt die Aufgabe zugrunde, eine Reibschweißverbindung von mehreren aufeinander folgenden flächigen Bauteilen mit einem Verbindungskörper zu schaffen, durch die auch nach Beendigung des Reibschweißvorgangs durch ständigen Druck auf die Bauteile deren Zusammenhalt in besonderer Weise sichergestellt ist. Eine Reibschweißverbindung gemäß der Erfindung ist im Anspruch 1 definiert. Erfindungsgemäß geschieht dies bei der eingangs erläuterten Reibschweißverbindung durch einen mit axialer Biegbarkeit ausgestatteten, als konische Scheibe ausgebildeten, einstückig in dem Verbindungskörper enthaltenen Bund, der mit stumpf konischer Anlagefläche gegenüber dem oberen Bauteil durch Andrücken des Verbindungskörpers am Ende des Reibschweißvorgangs zur Verspannung zwischen oberem Bauteil und Verbindungskörper eine Verformung in Anpassung an das obere Bauteil besitzt.

Der Bund weist also eine Gestaltung auf, die seine Verformung ermöglicht, die dann den verspannten Zusammenhalt zwischen dem oberen Bauteil und dem Verbindungskörper herstellt, so dass über den verformten Bund des obere Bauteil ständig an das untere Bauteil gedrückt wird.

Das hierzu verwendete Reibschweißverfahren zur Herstellung einer Reibschweißverbindung von mehreren aufeinander liegenden flächigen Bauteilen, die von einem Verbindungskörper zusammengehalten sind, verwendet für den Verbindungskörper einen Bund, der auf einem oberen Bauteil aufsitzt, das einen Durchbruch für die Aufnahme des Verbindungskörpers aufweist, der mit seiner Stirnseite eine durch Rotation und Druck des Verbindungskörpers erzeugte Reibschweißzone mit einem unteren Bauteil bildet, wobei in einem ersten Schritt nach Ausbildung der Reibschweißzone die Rotation des Verbindungskörpers ausläuft. Um mit diesem Verfahren dafür zu sorgen, dass zusätzlich zur Reibschweißverbindung das obere Bauteil unter einer auf das untere Bauteil zu gerichteten Andrucksspannung steht, auch wenn die Reibschweißzone erkaltet ist, wird erfindungsgemäß nach Ausbildung der Reibschweißzone in einem ersten Schritt an dessen Ende die Rotation des Verbindungskörpers auf den mit axialer Biegbarkeit ausgestatteten Bund durch ein auf den Verbindungskörper wirkendes Andrückwerkzeug ein Druck ausgeübt wird, durch den der Bund durch eine Verformung verspannt an das obere Bauteil angedrückt wird.

Das erfindungsgemäße Verfahren lässt sich für den Zusammenhalt mehrerer aufeinanderliegender flächiger Bauteile sowohl unter Zugrundelegung von jeweils einem Durchbruch für die Aufnahme des Verbindungskörpers aufweisender oberer Bauteile als auch ungelochter oberer Bauteile anwenden. Im ersteren Falle wird von dem Verbindungskörper mit seiner Stirnseite durch Rotation und Druck das Material des unteren Bauteils im Bereich der Stirnseite aufgeschmolzen, woraufhin die Ausbildung der Reibschweißzone am unteren Bauteil erfolgt. Im letzteren Falle wird der Verbindungskörper durch die oberen Bauteile aufgrund von deren Aufweichen hindurchgedrückt und zur Ausbildung der Reibschweißzone an das untere Bauteil herangeführt.

Die Reibschweißzone lässt sich zweckmäßig durch eine Ringfläche an der Stirnfläche des Verbindungskörpers ausbilden. In diesem Falle wird durch die flächenmäßig begrenzte Ringfläche bei Rotation und Andruck des Verbindungskörpers schnell eine Reibschweißzone gebildet, so dass diese Gestaltung für eine schnelle Herstellung besonders günstig ist. Es ist aber auch möglich, die Reibschweißzone durch die volle Querschnittsfläche des Bodens an der Stirnseite des Verbindungskörpers zu bilden. Hierbei ergibt sich eine besonders große Fläche der Reibschweißzone, die dementsprechend große Belastungen aushalten kann.

Verbindungskörpers zu bilden. Hierbei ergibt sich eine besonders große Fläche der Reibschweißzone, die dementsprechend große Belastungen aushalten kann.

Um den Antrieb des Verbindungskörpers für dessen Rotation und Druck günstig zu gestalten, gibt man dem Verbindungskörper auf seiner dem oberen Bauteil abgewandten Seite zweckmäßig einen in ein Antriebsfutter passenden Aufnahmequerschnitt. Bei diesem Querschnitt kann es sich z. B. um einen Sechskant handeln, der dann von einem entsprechenden Sechskant des Antriebsfutters aufgenommen werden kann. Bei diesem Antriebsquerschnitt kann es sich um einen dornartigen Querschnitt handeln, der dann also in ein mit einer entsprechenden Ausnehmung versehenes Antriebsfutter passt, oder es kann der Verbindungskörper einen hohlen Antriebsquerschnitt besitzen, in den dann ein dornartiges Antriebsfutter passt.

Im Falle der Gestaltung des Verbindungskörpers mit einem hohlen Antriebsquerschnitt kann man diesen zusätzlich mit einem Innenkonus gestalten, der dann vorteilhaft zur Aufnahme eines Andrückwerkzeuges dient. Ein solches Andrückwerkzeug bildet dann zweckmäßig einen in den Innenkonus passenden Außenkonus, womit dann der Innenkonus entsprechend nach außen hin aufgeweitet werden kann bzw. der Bund so verformt werden kann, dass dieser an das obere Bauteil angedrückt wird.

Den Verbindungskörper selbst kann man entweder als Mutterstück oder auch als Gewindebolzen ausbilden, womit die Möglichkeit gegeben ist, an dem Verbindungskörper bzw. mit dem Verbindungskörper weitere Bauteile zu befestigen.

Für eine automatische Fertigung kann es zweckmäßig sein, dem Verbindungskörper eine Gestaltung zu geben, die seine automatische Förderung ermöglicht bzw. vereinfacht. Dies kann beispielsweise dadurch geschehen, dass der Verbindungskörper über eine Sollbruchstelle mit dem Andrückwerkzeug verbunden ist, das am Ende des Reibschweißvorganges durch stärkeres Andrücken von der Sollbruchstelle abreißt. Diese Gestaltung eignet sich besonders im Falle der Verwendung eines besonders kurzen Verbindungskörpers, der sich allein selbst schlecht automatisch fördern lässt, sich aber durch seine Verlängerung durch das Andrückwerkzeug, das über eine Sollbruchstelle mit dem Verbindungskörper verbunden ist, mit bekannten Förderungseinrichtungen gut manipulieren lässt, ohne dass es nach dem Anschweißvorgang noch stört, da es dann über die Sollbruchstelle abgerissen und gegebenenfalls weggeworfen werden kann.

Dem Bund des Verbindungskörpers kann man eine den Bauteilen zugewandte Ringwulst geben, die bei Andrücken an das obere Bauteil einer seitlichen Verschiebung des Verbindungskörpers entgegenwirkt und außerdem auch eine Abdichtung herbeiführt. Fremdkörper, insbesondere Feuchtigkeit ist dadurch besonders gehindert, in den Bereich der Reibschweißzone zu dringen. Eine besondere Wirksamkeit entfaltet der Ringwulst dadurch, dass er gehärtet wurde.

In den Figuren sind Ausführungsbeispiele der Erfindung dargestellt. Es zeigen:
- Figur 1: den in den Durchbruch eines oberen Bauteils eingesetzten Verbindungskörper mit hohlem Antriebsquerschnitt und einer unverschweißten Ringfläche zur Auflage an dem oberen Bauteil in Schnittdarstellung;
- Figur 2: einen ähnlichen Verbindungskörper, dessen volle Querschnittsfläche seiner Stirnseite für den Reibschweißvorgang vorgesehen ist in Schnittdarstellung;
- Figur 3: einen Verbindungskörper ähnlich demjenigen gemäß Figur 1, allerdings ohne den hohlen Antriebsquerschnitt in Schnittdarstellung;
- Figur 4: den Verbindungskörper gemäß Figur 3 ungeschnitten;
- Figur 5: einen Verbindungskörper ähnlich demjenigen gemäß Figur 1 mit einem hohlen Antriebsquerschnitt und Ringfläche;
- Figur 6: eine Gestaltung ähnlich derjenigen gemäß Figur 1 mit aufgesetztem Andrückwerkzeug und ausgebildeter Reibschweißzone;
- Figur 7: die Anordnung gemäß Figur 6 nach dem Andrücken des Andrückwerkzeuges und Verformung des Bundes;
- Figur 8: eine abgewandelte Gestaltung des Andrückwerkzeuges;
- Figur 9: einen als Mutterstück ausgebildeten Verbindungskörper
- Figur 10: einen als Gewindebolzen ausgebildeten Verbindungskörper
- Figur 11: einen Verbindungskörper, der über eine Sollbruchstelle mit dem Andrückwerkzeug verbunden ist;
- Figur 12: der angedrückte Verbindungskörper mit abgerissener Sollbruchstelle;
- Figur 13: der angedrückte Verbindungskörper und das von ihm abgehobene Andrückwerkzeug;
- Figur 14: einen als Bolzen ausgebildeten Verbindungskörper mit Ringwulst an seinem Bund;
- Figur 15: einen Verbindungskörper mit aufgesetztem Antriebswerkzeug zum Aufsetzen auf ein ungelochtes oberes Bauteil;
- Figur 16: den durch das obere Bauteil hindurch getriebene Verbindungskörper mit in einer Innenbohrung aufgenommenem Material des oberen Bauteils;
- Figur 17: die gleiche Anordnung wie in Figur 16 dargestellt nach besonderem Andrücken des Verbindungskörpers;
- Figur 18: einen hohlen Verbindungskörper mit einer radial äußeren Ringschneide auf seiner den Bauteilen zugewandten Seite;
- Figur 19: eine Draufsicht auf den Verbindungskörper gemäß Figur 18;
- Figur 20: eine Abwandlung der Gestaltung des Verbindungskörpers gemäß Figur 18 mit einer radial inneren Ringschneide;
- Figur 21: einen Verbindungskörper mit massivem Innenteil und stumpfkegeliger Stirnseite;
- Figur 22: eine Reibschweißverbindung ähnlich derjenigen gemäß Figur 17 mit einer am Bund angebrachten Ringwulst.

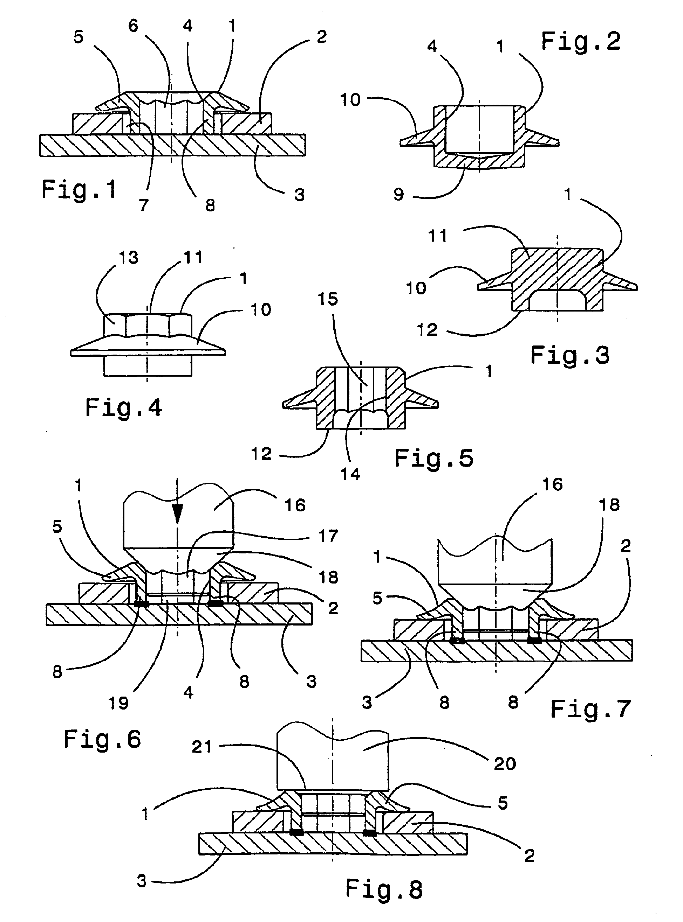

In der Figur 1 ist die Zusammenstellung des Verbindungskörpers 1 mit zwei aufeinanderliegenden flächigen Bauteilen, nämlich dem oberen Bauteil 2 und dem unteren Bauteil 3 dargestellt. Der Verbindungskörper, auf dessen Einzelheiten weiter unten näher eingegangen wird, besteht aus dem Innenteil 4, von dem radial nach außen hin der Bund 5 wegragt. Der Bund 5 ist, und gemäß der Erfindung, nach Art einer konischen Scheibe ausgebildet, die einstückig mit dem Innenteil 4 verbunden ist. Nach außen hin nimmt die Dicke des Bundes 5 hin ab, so dass der Bund 5 bei Druck auf seinen Außenrand eine gewisse axiale Biegbarkeit aufweist. Der Verbindungskörper 1 ist nach Art eines hohlen Rohrstücks ausgebildet, in seinem Inneren ist ein Innensechskant vorgesehen, der einen Antriebsquerschnitt bildet, in den ein dornartiges Sechskantwerkzeug eingeführt werden kann, um den Verbindungskörper 1 in Drehung zu versetzen, worauf weiter unten näher eingegangen wird. Der Verbindungskörper 1 ist in den Durchbruch 7 im oberen Bauteil 2 eingesetzt, er sitzt mit einer Ringfläche 8 auf der ihm zugewandten Seite des unteren Bauteils 3 auf, wo später, wie weiter unten dargestellt, eine Reibschweißzone gebildet wird.

In den Figuren 2 bis 5 sind Abwandlungen des Verbindungskörpers 1 dargestellt. Gemäß Figur 2 ist der Verbindungskörper 1 in Schnittdarstellung mit seinem Innenteil 4 hohl ausgebildet, er besitzt den Boden 9, der mit seiner Stirnfläche für die Bildung der Reibschweißzone gestaltet ist. An dem Innenteil 4 ist nach außen hin wegragend der Bund 10 angeordnet, der im Querschnitt so gestaltet ist, wie der Bund 5 gemäß Figur 1.

Der Verbindungskörper 1 gemäß Schnittdarstellung in Figur 3 besteht aus dem im Wesentlichen massiven Innenteil 11, das in Richtung zu dem Aufsetzen auf ein unteres Bauteil mit der Ringfläche 12 gestaltet ist, die zur Bildung der Reibschweißzone vorgesehen ist. Von dem Innenteil 11 ragt nach außen hin der Bund 10 weg, der so gestaltet ist wie de Bund 10 gemäß Figur 2.

In der Figur 4 ist der Verbindungskörper 1 gemäß Figur 3 in Gesamtdarstellung gezeigt, aus der ersichtlich ist, dass das Innenteil 11 als Außensechskant 13 gestaltet ist und somit von einem Antriebswerkzeug mit Innensechskant in Drehung versetzt werden kann.

In Figur 5 ist eine Abwandlung des Verbindungskörpers 1 gemäß den Figuren 3 und 4 im Schnitt dargestellt, bei der lediglich das Innenteil 14 durchgehend hohl gestaltet ist, um damit Platz für einen Innensechskant 15 zu bilden. Der Verbindungskörper 1 gemäß Figur 5 ist ähnlich der Gestaltung gemäß den Figuren 3 und 4 mit einer Ringfläche 12 versehen, die zur Bildung einer Reibschweizzone dient.

In der Figur 6 ist die Anordnung gemäß Figur 1 zusammen mit einem Andrückwerkzeug 16 dargestellt, das mit seinem sechskantigen Andrückdom 17 in den Innensechskant 19 des Verbindungskörpers 1 eingreift, wobei der Außenkonus 18 beim Eindrücken des Andrückwerkzeugs 16 den oberen Rand des Verbindungskörpers 1 auseinanderdrückt, womit der Bund 5 in Richtung auf das obere Bauteil 2 gedrückt wird. Außerdem berührt das Innenteil 4 mit seiner Ringfläche 8 die ihm zugewandte Oberfläche des unteren Bauteils 3. Durch die Schwärzung an der Berührungsstelle wird angedeutet, dass sich an dieser Stelle bei Drehung des Andrückwerkezugs 16 und Andrücken gegen den Verbindungskörper 1 durch Reibungshitze eine Reibschweißzone ausbildet, die bei Erkalten schließlich die feste Verbindung zwischen dem unteren Bauteil 3 und dem Verbindungskörper 1 herstellt.

Figur 6 zeigt die Wirkung des ersten Schritts des erfindungsgemäßen Verfahrens zur Bildung der Reibschweißzone. Nach deren Ausbildung wird das Andrückwerkzeug 16 stillgesetzt, hält aber seinen Druck gegen den Verbindungskörper 1 noch aufrecht.

Mit dem Anhalten der Drehung des Andrückwerkzeugs 16 wird nunmehr der zweite Schritt des erfindungsgemäßen Verfahrens eingeleitete, gemäß dem das Andrückwerkzeug 16, wie in Figur 7 dargestellt, mit erhöhtem Druck auf den Verbindungskörper 1 drückt, wobei der Bund 5 des Verbindungskörpers 1 sich mehr flächig umbiegt und damit einen entsprechend hohen Druck auf die betreffende Oberfläche des oberen Bauteils 2 ausübt. Damit ist die Verbindung zwischen den beiden Bauteilen 2 und 3 hergestellt, nämlich über den Verbindungskörper 1, der einerseits mit seiner Ringfläche 8 und der dort ausgebildeten Reibschweißzone fest mit dem unteren Bauteil 3 verbunden ist, und der mit seinem leicht zurückgebogenen Bund 5 auf das obere Bauteil 2 in Richtung auf das untere Bauteil 3 drückt, womit beide Bauteile durch den Verbindungskörper 1 in ihrer zusammengefügten Lage festgehalten werden.

In der Figur 8 ist eine Abwandlung der Gestaltung des Andrückwerkzeugs dargestellt. Das Andrückwerkzeug 20 gemäß Figur 8 besitzt eine im Wesentlichen plane radial verlaufende Andruckfläche 21, die ähnlich der Einwirkung auf den Verbindungskörper 1 gemäß Figur 7 dessen Bund 5 seitlich nach außen wegdrückt, der dabei gegen die betreffende Oberfläche des oberen Bauteils angedrückt wird. Darüber hinaus entspricht die Darstellung in Figur 8 derjenigen gemäß Figur 7, so dass zur Erläuterung der Funktion der einzelnen Teile auf Figur 7 verwiesen werden kann.

Der in den vorstehenden Figuren dargestellte Verbindungskörper kann auch dazu benutzt werden, entweder als Mutter oder als Gewindedorn verwendet zu werden.

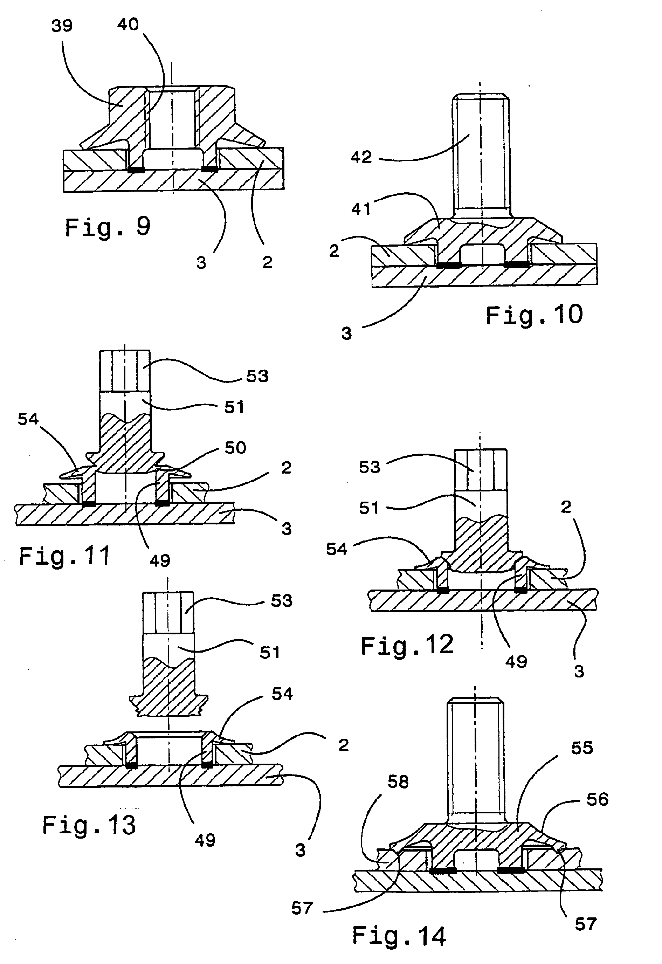

Gemäß Figur 9 ist der Verbindungskörper 39 mit einer durchgehenden Gewindebohrung 40 versehen, so dass der die beiden Bauteile 2 und 3 zusammenhaltende Verbindungskörper 39 auch dazu verwendet werden kann, einen Gewindebolzen mit seinem Gewinde 40 zur Befestigung irgendeines weiteren Gegenstandes aufzunehmen.

Bei der Darstellung gemäß Figur 10 handelt es sich um eine Ausbildung des Verbindungskörpers 41 als Gewindebolzen 42, der fest mit der Grundstruktur des Verbindungskörpers 41 verbunden ist. Die Verbindung des Verbindungskörpers 39 bzw. 41 mit dem oberen Bauteil 2 und dem unteren Bauteil 3 geschieht hier in der Weise, wie dies im Zusammenhang z. B. mit der Figur 6 erläutert ist.

Die Gestaltungen gemäß den Figuren 9 und 10 lassen sich für verschiedene Verwendungszwecke ausnutzen, z. B. für die Bildung eines Massekontaktes.

Eine weitere besondere Gestaltung des Verbindungskörpers geht aus den Figuren 11, 12 und 13 hervor, bei denen es sich darum handelt, den Verbindungskörper zunächst durch Verbindung mit dem Andrückwerkzeug eine umfänglichere Gestaltung zu geben, die sich besonders für ein automatische Zuführsystem eignet, in dem besonders kleine Verbindungskörper schwierig zu transportieren und an der Verarbeitungsstelle richtig einzusetzen sind. Diese Erweiterung der Gestaltung des Verbindungskörpers besteht darin, dass der eigentliche Verbindungskörper, der dem in Figur 1 dargestellten Verbindungskörper entspricht, mit dem Andrückwerkzeug zunächst fest verbunden ist.

Gemäß Figur 11 ist der Verbindungskörper 49 über die Sollbruchstelle 50 mit dem Andrückwerkzeug 51 einstückig verbunden, bei dem es sich auf seiner dem Verbindungskörper 49 zugewandten Seite um eine Gestaltung mit einem Konus 52 handelt, der beim Reibschweißvorgang nur wirkt, wie dies im Zusammenhang mi den Figuren 6 und 7 beschrieben ist. Das Andrückwerkzeug 51 wird durch einen Dorn gebildet, der am rückwärtigen Ende einen Sechskant 53 zur Aufnahme in einem Antriebswerkezug bildet. Beim Andrücken des Verbindungskörpers 49 und dem anschließend folgenden Reibschweißvorgang (wie anhand der vorhergehenden Figuren beschrieben ist) wird schließlich durch stärkeres Andrücken des Andrückwerkzeuges 51 die Sollbruchstelle 50 abgerissen, womit der Konus 52 des Andrückwerkzeugs 51 teilweise in den Innenraum des Verbindungskörpers 49 eindringen kann und dabei den Bund 54 des Verbindungskörpers 49 entsprechend verformt (siehe Figur 12), womit sich schließlich eine Gestaltung es durch Reibschweißen mit dem unteren Bauteil 3 verbundenen Verbindungskörpers 49 ergibt, die der Darstellung in Figur 7 entspricht. Nach erfolgtem Reibschweißen kann dann das Andrückwerkzeug 51 vom Verbindungskörper 49 abgehoben werden (siehe Figur 13), so dass das Andrückwerkzeug 51 die über den Verbindungskörper 49 hergestellte Spannungsverbindung der Bauteile 2 und 3 nicht mehr stört.

In der Figur 14 ist eine Reibschweißverbindung dargestellt, die weitgehend derjenigen gemäß Figur 10 entspricht, so dass auf diese Figur verwiesen werden kann. Der Verbindungskörper 55 weist am äußeren Rand des Bundes 56 die Ringwulst 57 auf, die sich im Wesentlichen über ihre Höhe in das Material des oberen Bauteils 58 eingedrückt hat. Durch diese so mit dem oberen Bauteil 58 verbundene Ringwulst 57 ergibt sich eine besondere Abdichtung des Bundes 56 gegen das obere Bauteil 58 sowie eine Sicherung des Verbindungskörpers 55 gegen seitliche Verschiebungskräfte.

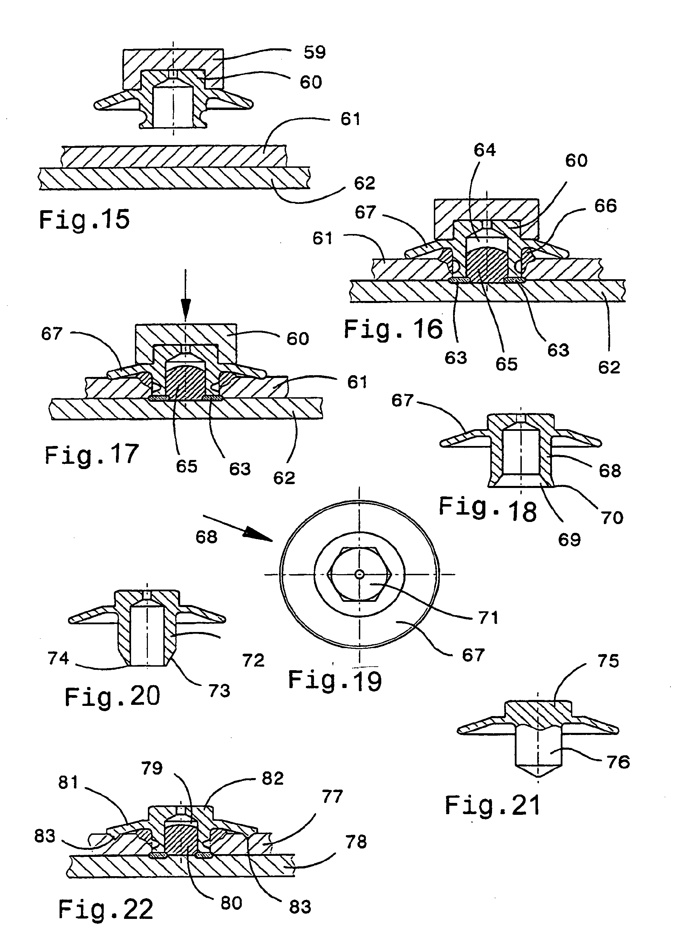

Figur 15 zeigt einen von einem Dreh- und Andrückwerkzeug 59 aufgenommenen Verbindungskörper 60, der auf das obere ungelochte Bauteil 61 aufzusetzen ist. Figur 16 zeigt hierzu den mit den beiden Bauteilen 61 und 62 verbundenen Verbindungskörper 60, bei dem sich zwischen dem Verbindungskörper 60 und dem unteren Bauteil 62 die Reibschweißzone 63 ausgebildet hat. In den Innenraum 64 des Verbindungskörpers 60 ist das beim Plastifizieren des oberen Bauteils 61 verdrängte Material 65 eingedrungen, wobei außerdem bei dem Eindringungsprozess in das obere Bauteil 61 auch plastifiziertes Material 66 sich unter dem Bund 67 abgelagert hat.

In der Figur 17 ist die Anordnung gemäß Figur 16 dargestellt, und zwar nach nachträglichem Andrücken des Verbindungskörpers 60 gegen die beiden Bauteile 61 und 62, wobei der Bund 67 etwas zurückgebogen ist und damit seine Federkraft durch Eindrücken in das obere Bauteil 61 ausüben kann.

In der Figur 18 ist ein hohler Verbindungskörper 68 dargestellt, der im Prinzip den in den Figuren 1 und 5 dargestellten Verbindungskörpern gleicht, der allerdings auf seiner den zusammenzufügenden Bauteilen zugewandten Stirnseite in einer konisch verlaufenden Öffnung 69 mit nach außen stumpfer Schneide 70 endet. Mit dieser Gestaltung wird das Eindringen des Verbindungskörpers 68 in ein ungelochtes oberes Bauteil und das Einfließen verdrängten Materials nach innen erleichtert.

Die Figur 19 zeigt eine Draufsicht auf den Verbindungskörper gemäß Figur 18, wobei zusätzlich dargestellt ist, dass der Verbindungskörper 68 an seiner Rückseite als Sechskant 71 ausgebildet ist, der von einem entsprechend geformten Andrückwerkzeug aufgenommen werden kann.

In der Figur 20 ist ein weitere Verbindungskörper 72 dargestellt, der sich von dem Verbindungskörper gemäß Figur 18 dadurch unterscheidet, dass an seiner Stirnseite ein Außenkonus 73 angebracht ist, der dann in der inneren Schneide 74 ausläuft. Auch diese Schneide erleichtert dem Verbindungskörper 72 das Eindringen in ein ungelochtes oberes Bauteil und das Wegfließen verdrängten Materials nach außen.

In der Figur 21 ist ein Verbindungskörper 75 dargestellt, der in seinem inneren Teil als Zapfen 76 ausgebildet ist, so dass es sich bei dem Verbindungskörper 75 um ein ungelochtes Konstruktionselement handelt.

Figur 22 zeigt eine Reibschweißverbindung von einem oberen Bauteil 77, das ursprünglich ungelocht war, und einem unteren Bauteil 78, wobei ähnlich der Darstellung gemäß Figur 16 in den Hohlraum 79 des Verbindungskörpers 82 Material 80 eingeflossen ist, das von dem Aufschmelzen des betreffenden Teils des oberen Bauteils 77 herrührt. Ergänzend ist der Bund 81 des Verbindungskörpers 82 mit dem Ringwulst 83 versehen, der im Umfang seiner Höhe in das Material des oberen Bauteils 77 eingedrungen ist. Insofern entspricht die Darstellung der Gestaltung gemäß Figur 17.

## Patentansprüche

1. Reibschweißverbindung mit mehreren aufeinanderiegenden flächigen Bauteilen (2, 3) und mit einem Verbindungskörper (5, 39), wobei die Bauteile (2, 3) von dem Verbindungskörper (1, 39) zusammengehalten sind, der mit einem Bund (5, 10) auf einem oberen Bauteil (2) aufsitzt, das einen Durchbruch (7) für die Aufnahme des Verbindungskörpers (1, 39) aufweist, der mit seiner Stirnseite eine durch Rotation und Druck des Verbindungskörpers (1, 39) erzeugte Reibschweißzone mit einem unteren Bauteil (3) bildet, **gekennzeichnet durch** einen mit axialer Biegbarkeit ausgestatteten, als konische Scheibe ausgebildeten, einstückig in dem Verbindungskörper enthaltenen Bund (5, 10), der mit stumpf konischer Anlagefläche gegenüber dem oberen Bauteil (2) **durch** Andrücken des Verbindungskörpers (1, 39) am Ende des Reibschweißvorgangs zur Verspannung zwischen oberem Bauteil (2) und Verbindungskörper (1, 39) eine Verformung in Anpassung an das obere Bauteil (2) besitz.

2. Verfahren zur Herstellung einer Reibschweißverbindung nach Anspruch 1, wobei die Bauteile (2, 3) von einem Verbindungskörper (1, 39) zusammengehalten sind, der mit einem Bund (5, 10) auf einem oberen Bauteil (2) aufsitzt, das einen Durchbruch (7) für die Aufnahme des Verbindungskörpers (1, 39) aufweist, der mit seiner Stirnseite eine durch Rotation und Druck des Verbindungskörpers (1, 39) erzeugte Reibschweißzone mit einem unteren Bauteil (3) bildet, wobei in einem ersten Schritt nach Ausbildung der Reibschweißzone die Rotation des Verbindungskörpers (1, 39) ausläuft, **dadurch gekennzeichnet, dass** in einem zweiten Schritt mit Auslaufen der Rotation des Verbindungskörpers (1, 39) auf den mit axialer Biegbarkeit ausgestatteten Bund (5, 10) durch ein auf den Verbindungskörper (1, 39) wirkendes Andrückwerkzeug ein Druck ausgeübt wird, durch den der Bund (5, 10,) durch eine Verformung verspannt an das obere Bauteil (2) angedrückt wird.

## Claims

1. A friction welding connection having several planar components (2, 3) located one atop the other and a connection body (1, 39), which components (2, 3) are held together by said connection body (1, 39) which has a collar (5, 10) that rests on an upper component (2), said upper component (2) having an aperture (7) for accommodating said connection body (1, 39) therein, which connection body (1, 39) - via a front face thereof - forms a friction welding zone with a lower component (3), which zone is generated by rotation and pressurization of said connection body (1, 39), **characterized by** a collar (5, 10) which is axially flexible, designed as a conical disk and integrally formed with said connection body and which has a frustoconical bearing surface opposite said upper component (2) that will undergo deformation so as to conform to said upper component (2) as said connection body (1, 39) is being pressed against said upper component (2) at the end of the friction welding process to accomplish tight fastening of said upper component (2) to said connection body (1, 39).

2. A method of producing a friction welding connection as claimed in claim 1 wherein said components (2, 3) are held together by a connection body (1, 39) which has a collar (5, 10) that rests on an upper component (2), said upper component (2) having an aperture (7) for accommodating said connection body (1, 39) therein, which connection body (1, 39) - via a front face thereof - forms a friction welding zone with a lower component (3), which zone is generated by rotation and pressurization of said connection body (1, 39), wherein - in a first step following formation of said friction welding zone - rotation of said connection body (1, 39) is gradually stopped, **characterized in that** in a second step - as the rotation of the connection body (1, 39) gradually comes to a halt - pressure is exerted on said axially flexible collar (5, 10) by a pressing tool acting on said connection body (1, 39), which pressure causes said collar (5, 10) to undergo deformation and thus be tightly pressed onto said upper component (2).

## Revendications

1. Assemblage soudé par friction avec plusieurs éléments constitutifs (2, 3) plats superposés et avec un corps d'assemblage (1, 39), les éléments constitutifs (2, 3) étant maintenus ensemble par ledit corps d'assemblage (1, 39), qui, avec un épaulement (5, 10), repose sur un élément constitutif supérieur (2) qui comporte une percée (7) en vue d'accueillir le corps d'assemblage (1, 39) qui, avec son côté frontal, engendre une zone de soudage par friction par la rotation et la pression du corps d'assemblage (1, 39) avec un élément constitutif inférieur (3), **caractérisé par** un épaulement (5, 10) pliable dans le sens axial, formé en une rondelle conique et contenu intégralement dans le corps d'assemblage qui, avec une surface d'appui en forme de cône mat vis-à-vis de l'élément constitutif supérieur (2) servant au serrage entre l'élément constitutif supérieur (2) et le corps d'assemblage (1, 39) réalisé en appuyant sur le corps d'assemblage (1, 39) à la fin du soudage par friction, dispose d'une déformation à des fins d'emboîtement avec l'élément constitutif supérieur (2).

2. Procédé d'assemblage par soudage par friction selon la revendication 1, les éléments constitutifs (2, 3) étant maintenus ensemble par ledit corps d'assemblage (1, 39), qui, avec un épaulement (5, 10), repose sur un élément constitutif supérieur (2) qui comporte une percée (7) en vue d'accueillir le corps d'assemblage (1, 39) qui, avec son côté frontal, engendre une zone de soudage par friction par la rotation et la pression du corps d'assemblage (1, 39) avec un élément constitutif inférieur (3) où, dans une première étape après la formation d'une zone de soudage par friction, la rotation du corps d'assemblage (1, 39) prend fin, **caractérisé en ce que**, dans une seconde étape suivant la fin de la rotation du corps d'assemblage (1, 39), un outil de pression agissant sur le corps d'assemblage (1, 39) exerce, sur l'épaulement (5, 10) pliable dans le sens axial, une pression par laquelle l'épaulement (5, 10) est appuyé à l'état tendu contre l'élément constitutif supérieur (2) par le biais d'une déformation.
